# EUROPEAN PATENT APPLICATION

(11) **EP 4 764 448 A1**
(43) Date of publication of application: **24.06.2026**
(21) Application number: 24221545.7
(22) Date of filing: 19.12.2024
(51) Int. Cl.: G01N 1/06

(54) **CRYOSTAT MICROTOME**

(71) Applicant: Leica Biosystems Nussloch GmbH, 69226 Nussloch (DE)
(72) Inventor: Thiem, Stefan, 69124 Heidelberg (DE); Bayer, Oliver, 65527 Niedernhausen (DE); Kuffner, Benedikt, 76327 Pfinztal (DE)
(74) Representative: Schaumburg und Partner Patentanwälte mbB

(57) **Abstract**

A cryostat microtome (100, 500) comprises a cryostat chamber (104), a sample holder (106) arranged inside the cryostat chamber (104) and having an object head (108, 400) configured to hold a sample (102), a sectioning unit (110) arranged inside the cryostat chamber (104) and configured to section the sample (102), and a cooling system (114) having a first circuit (116) for cooling the cryostat chamber (104) and a second circuit (200) connecting the first circuit (116) with the object head (108, 400) for cooling the object head (108, 400). The first circuit (116) comprises at least 20 g and at most 100, 500 g of a working fluid having a GWP100, 500 of less than one, a compressor (120) arranged outside the cryostat chamber (104) and configured to compress the working fluid, and at least one evaporator (128, 134) arranged inside the cryostat chamber (104) and configured to cool the cryostat chamber (104) by evaporating the working fluid. The second circuit (200) comprises a heat transfer fluid and a pump (138) configured to move the heat transfer fluid through the second circuit (118, 200).

## Description

### Technical field

A cryostat microtome is provided.

### Background

Biological researchers and clinical specialists may view biological samples under a microscope to identify and analyze tissues or cells of the biological sample for research, diagnosis, or other purposes. These samples may comprise thin sections, which were cut from a larger thicker sample, such as a tissue core, and a glass slide on which the thin sections are placed. A cryostat microtome is a device designed for aiding in the preparation of thin sections.

### Summary

It is an object to provide a cryostat microtome, which improves upon known cryostat microtomes.

The proposed cryostat microtome comprises a cryostat chamber, a sample holder arranged inside the cryostat chamber and having an object head configured to hold a sample, a sectioning unit arranged inside the cryostat chamber and configured to section the sample, and a cooling system having a first circuit for cooling the cryostat chamber and a second circuit connecting the first circuit with the object head for cooling the object head. The first circuit comprises at least 20 g and at most 100 g of a working fluid having a GWP100 of less than one, a compressor arranged outside the cryostat chamber and configured to compress the working fluid, and at least one evaporator arranged inside the cryostat chamber and configured to cool the cryostat chamber by evaporating the working fluid. The second circuit comprises a heat transfer fluid and a pump configured to move the heat transfer fluid through the second circuit.

The cryostat microtome may be used to cut extremely thin sections of the sample, for example in the range of a few µm. To cut the extremely thin sections from the sample, the sample is cooled inside the cryostat chamber. In some embodiments, the sample may be cooled to a temperature in the range of -10 °C to -50 °C, for example to around -20 °C or -42 °C. The cooled sample may then be arranged at the object head, where it is kept at the low temperature it was cooled to and cut using the sectioning unit. In some embodiments, a different temperature may be set for the object head than for the remaining cryostat chamber, enabling the sample to be cut at a different temperature than the temperature the sample is stored at. The proposed cryostat microtome uses a low volume of a low GWP100 working fluid, such as a refrigerant or mixture of refrigerants, to achieve the cooling of the sample. The working fluid may further comprise any or all of the following: a lubricant, a colorant, and an additive.

GWP100 refers to the Global Warming Potential of the working fluid in a 100-year time horizon. The GWP100 of CO2 is defined to be 1. Values of the GWP100 for different refrigerants are provided by the Intergovernmental Panel on Climate Change (IPCC) in their Assessment Reports (AR). For example, the IPCC AR6 from 2020 provides a GWP100 of 0.02 for propane (R290) and of 0.437 for ethane (R170). By using a low volume, for example 100 g or less, of a working fluid having a low GWP100, for example a GWP100 of less than one, the cryostat microtome can be made very environmentally friendly. In some embodiments, the first circuit may comprise more than 0 g of the working fluid. The first circuit may also comprise 90 g or less of the working fluid.

The low volume of the working fluid is made possible by combining the first circuit, which may act as a vapor compression circuit using the low GWP100 working fluid to cool the cryostat chamber, with the second circuit, which may act as a heat transfer circuit that cools the sample arranged on the object head using the heat transfer fluid. The first circuit cools the cryostat chamber by compressing the working fluid outside the cryostat chamber and evaporating the working fluid in the evaporator inside the cryostat chamber. The first circuit may comprise additional elements, for example a heat exchanger (condenser, suction gas heat exchanger) configured to remove heat from the compressed working fluid, an expander (capillary tube, expansion valve) configured to reduce the pressure of the working fluid before the working fluid enters the evaporator, an exchange phase separator, and a filter dryer. An exchange phase separator separates different phases of the working fluid, for example the liquid phase from the vapor phase. A filter dryer filters impurities and removes moisture from the working fluid. The heat transfer fluid of the second circuit is cooled by the first circuit, for example by a heat exchanger connecting the first circuit with the second circuit. The cold heat transfer fluid is then pumped by the pump to the object head, where another heat exchanger may be used to carry heat away from the sample via the heat transfer fluid.

The working fluid may comprise a natural refrigerant, such as ammonia (R717), or a hydrocarbon, which in general have low GWP100 values. The refrigerant may also comprise a flammable refrigerant, for example a refrigerant of the A3 safety class, such as propane (R290) and isobutane (R600a). Refrigerants of the A3 safety class have a low toxicity. However, the working fluid may also comprise any other type of refrigerant, for example a hydrofluorocarbon or hydryfluoroolefin such as HFO-1234yf or HFO-1234ze, or Helium. As can be seen in the aforementioned list, many low-GWP refrigerants are flammable. By providing the cryostat microtome capable of operating with 100 g or less of the working fluid, the proposed cryostat microtome can be shipped via air freight, for example. The heat transfer fluid may be a brine, for example, such as a potassium formate based heat transfer fluid. The heat transfer fluid may also be a glycol-based liquid or a mixture of any or all of the aforementioned liquids.

In an embodiment, the cryostat microtome comprises a temperature sensor arranged inside the cryostat chamber, and a controller configured to control the compressor of the first circuit to turn the compressor on and off based on a sensor signal of the temperature sensor. For example, the controller may realize a hysteresis control loop in which the compressor is turned on when chamber temperature inside the cryostat chamber is warmer than a first threshold temperature and turned off when the temperature inside the cryostat chamber is colder a second threshold temperature. In some embodiments, the controller may be configured to control the compressor of the first circuit to periodically turn the compressor on and off according to a predefined cycle. For example, the controller may be configured to generate a periodic control signal comprising alternating high states, which turn the compressor on, and low states, which turn the compressor off. Periodically turning the compressor on and off to cool the cryostat chamber is more energy efficient than running the compressor continuously. During the downtime of the compressor, i.e. the periods where the compressor is turned off, the second circuit acts as a buffer, keeping the temperature at the object head stable. Thus, combining the periodic turning on and off based on the temperature in the cryostat chamber or according to the predefined cycle with the combination of the first and second circuits makes the cryostat microtome very energy efficient.

In another embodiment, the controller is configured to control the pump of the second circuit to operate continuously. In such an embodiment, the heat transfer fluid is continuously pumped through the second circuit while the cryostat microtome is in an operating mode, for example when the cryostat microtome is turned on. This keeps the temperature stable, in particular at the object head, thereby maintaining the integrity of the sample. The continuous pumping of the heat transfer fluid may be advantageously combined with the periodic turning on and off of the compressor, since the continuously circulating heat transfer fluid helps keep the temperature at the object head stable during the downtime of the compressor, i.e. when the compressor is not running because the temperature inside the cryostat chamber is colder the second threshold temperature.

In another embodiment, the second circuit comprises a heat transfer fluid tank thermally coupled to the first circuit. The heat transfer fluid tank may act as reservoir for the heat transfer fluid, a heat exchanger between the first circuit and the second circuit, and a buffer for keeping the heat transfer fluid cooled, for example during the downtime of the compressor. By providing the second circuit with the heat transfer fluid tank, temperature stability of the object head and in the cryostat chamber can be improved. In some embodiments, the heat transfer fluid tank may have a volume as low as 200 ml and as high as 1500 ml or 2000 ml.

In another embodiment, at least one pipe segment of the first circuit is arranged inside the heat transfer fluid tank to thermally couple the heat transfer fluid tank to the first circuit. The at least one pipe segment of the first circuit may be arranged following an expander, for example an expansion valve, such that the working fluid directed through the heat transfer fluid tank is cool. By directing the cooled working fluid through the heat transfer fluid tank, a large volume of heat transfer fluid may be cooled at once. In this embodiment, the heat transfer fluid tank realizes a heat exchanger between the first circuit and the second circuit, which reduces the overall volume of the cooling system. In other embodiments, multiple pipe sections of the first circuit may be arranged inside the heat transfer fluid tank.

In another embodiment, at least one pipe segment comprises a helix-shaped subsection. The helix-shaped subsection increases the surface area of the at least one pipe segment arranged inside the heat transfer fluid tank compared to a straight section. This increases the overall capacity for heat transfer between the first circuit and the second circuit. Another advantage of the helix-shape is that it packs densely inside a cylinder-shaped heat transfer fluid tank.

In another embodiment, the cryostat chamber is insulated using an insulation foam and the heat transfer fluid tank is at least partly arranged inside the insulating foam. Thereby, the heat transfer fluid tank is at least partly insulated, keeping the temperature of the heat transfer fluid inside the heat transfer fluid tank stable. Using the insulation foam of the cryostat chamber for insulating the heat transfer fluid tank is a space-efficient arrangement of the heat transfer fluid tank, which allows a compact design of the cryostat chamber.

In another embodiment, the pump of the second circuit is arranged inside the cryostat chamber. Thereby, the pump is kept at about the same temperature as the cryostat chamber. Keeping the pump at the same temperature as the cryostat chamber helps in preventing condensation on the pump, which can be detrimental to pump operation, by for example causing corrosion, damage to electrical components and causing drag on moving parts.

In another embodiment, the object head comprises a thermoelectric cooler configured to remove heat from a sample plate on which the sample is arranged, and a heat exchanger configured to thermally couple a hot side of the thermoelectric cooler to the second circuit. In some embodiments, the sample plate may be configured to be removable from the object head, making it possible to easily change the sample. For example, the sample plate may be screwed into the object head or fixed to the object head using a magnet. The thermoelectric cooler removes heat from the sample via the sample plate, when a DC power is applied. The removed heat is transferred to the heat transfer fluid by the heat exchanger and carried away from the object head by the heat transfer fluid. Using the thermoelectric cooler makes it possible to cool the sample quickly and in a controlled manner and to keep the sample precisely at a set temperature. For example, the temperature at the object head may be controlled to be different from the temperature of the remaining cryostat chamber, enabling the sample to be cut at a different temperature than the temperature the sample is stored at.

In another embodiment, the object head comprises a housing, and at least one first elastic element pressing the thermoelectric cooler and the heat exchanger against the housing. In some embodiments, the first elastic element may be a disk spring. By pressing the thermoelectric cooler and the heat exchanger against the housing, a so-called floating mount is realized. This helps compensate for temperature-related tolerances, such as thermal expansion or contraction, which ensures good thermal contact between the elements. The floating mount further minimizes thermal contact between the housing and the combined arrangement of the thermoelectric cooler and the heat exchanger, reducing thermal leakage, and thus the amount of heat that needs to be transferred away from the object head via the second circuit.

In another embodiment, the object head comprises an insulating frame arranged between the housing and the thermoelectric cooler. In this embodiment, the thermoelectric cooler abuts the insulating frame, which in turn abuts the housing. Thereby, the insulating frame further minimizes thermal contact between the housing and the thermoelectric cooler.

In another embodiment, the housing comprises a front housing and a back housing fastened together by fastening elements. The at least one first elastic element may be arranged between the back housing and the thermoelectric cooler, such that the thermoelectric cooler and the heat exchanger are pressed against the front housing. In this embodiment, the housing has an opened state, in which the front housing and the back housing are not fastened together by the fastening elements. In the opened state, the inside of the housing may be accessed, for example the thermoelectric cooler and the heat exchanger. The housing also has a closed state, in which the front housing and the back housing are fastened together by the fastening elements, thereby enclosing the thermoelectric cooler and the heat exchanger. In the closed state, the at least one first elastic element may press the thermoelectric cooler and the heat exchanger against the front housing to realize the floating mount.

In another embodiment, the thermoelectric cooler and the heat exchanger are pressed together by at least one second elastic element. The second elastic element may be in O-ring, for example, pressing the thermoelectric cooler and the heat exchanger together like a rubber band. Using the second elastic element to press the thermoelectric cooler and the heat exchanger together compensates for temperature-related tolerances, for example thermal expansion or contraction, thereby ensuring good thermal contact between the elements.

In another embodiment, the object head is mounted to a body of the cryostat microtome by a ball and socket joint. For example, the back housing may comprise a ball of the ball and socket joint, which is fitted into a socket, allowing the object head to be freely rotated around one or more axes. The flexible tubing of the second circuit may be routed through the ball, for example through the center of the ball. Thereby, the flexible tubing is protected by the ball and not stretched when the angle of the object head is adjusted.

In another embodiment, the cryostat microtome comprises a heatable lid electrically connected to a body of the cryostat microtome by a pair of male and female electrical connectors. The lid allows access to an inside of the cryostat chamber and may be a sliding lid or a hinged lid, for example. The lid may comprise a window, allowing a view of the inside of the cryostat chamber, for example for operating the sectioning unit. Heating the lid prevents condensation, which would block the view of the inside of the cryostat chamber. Electrical power for heating the lid is provided via the pair of male and female electrical connectors from the body of the cryostat microtome. The pair of male and female electrical connectors is a safer alternative to metal-on-metal connectors or sliding connectors, in particular when working with flammable refrigerants.

In another embodiment, the sample holder comprises a drive unit configured to move the object head past the sectioning unit. The drive unit may comprise one or more motors, such as linear motors or stepper motors, for moving the object head. In such an embodiment, the object head holding the sample may be moved past a knife or blade of the sectioning unit in order to cut thin sections of the sample. The second circuit may comprise flexible or soft tubing to accommodate the movement of the object head. Since flexible or soft tubing may leak, it is particularly advantageous to use the heat transfer fluid in the second circuit, since thereby the working fluid is prevented from leaking.

### Short Description of the Figures

Hereinafter, embodiments are described referring to the drawings, wherein:
- Figure 1: is a schematic view of a cryostat microtome according to an embodiment;
- Figure 2: is a schematic view of a second circuit of the cryostat microtome according to an embodiment;
- Figure 3: is a schematic view of a heat transfer fluid tank of the cryostat microtome according to an embodiment;
- Figure 4: is a schematic view of an object head of the cryostat microtome according to an embodiment; and
- Figure 5: is a schematic isometric view of a cryostat microtome according to an embodiment.

### Detailed Description of the Figures

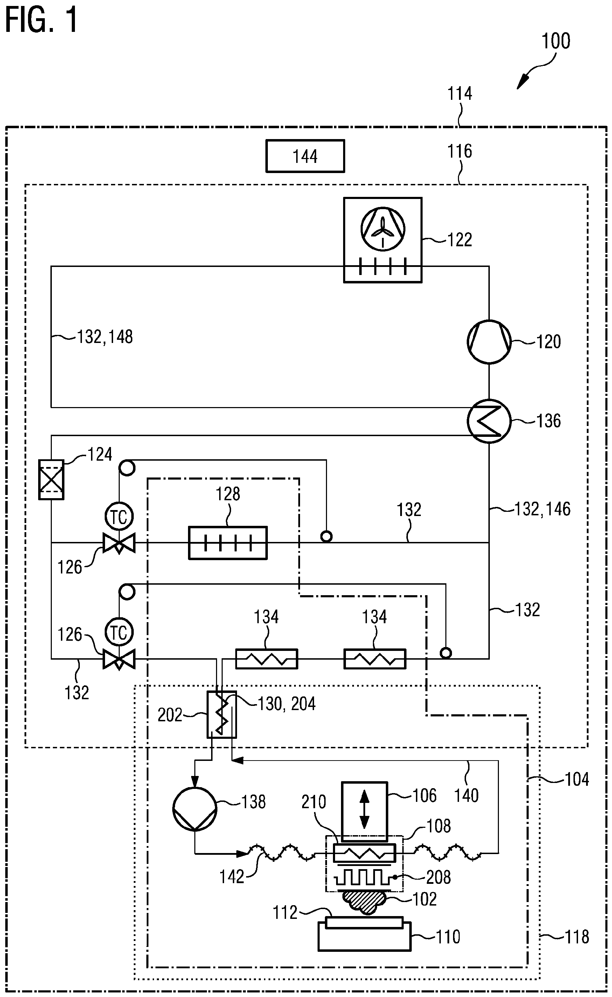

Figure 1 is a schematic view of a cryostat microtome 100 according to an embodiment. The cryostat microtome 100 may be used to cut thin slices of a sample 102, for example histological sections of a biological specimen such as a tissue core. To enable cutting extremely thin sections of the sample 102, the cryostat microtome 100 may cool the sample 102 to a very low temperature, for example in the -20 °C to -30 °C range or as low as -42 °C. Cooling the sample 102 makes it possible to cut sections of 2 µm to 20 µm thickness.

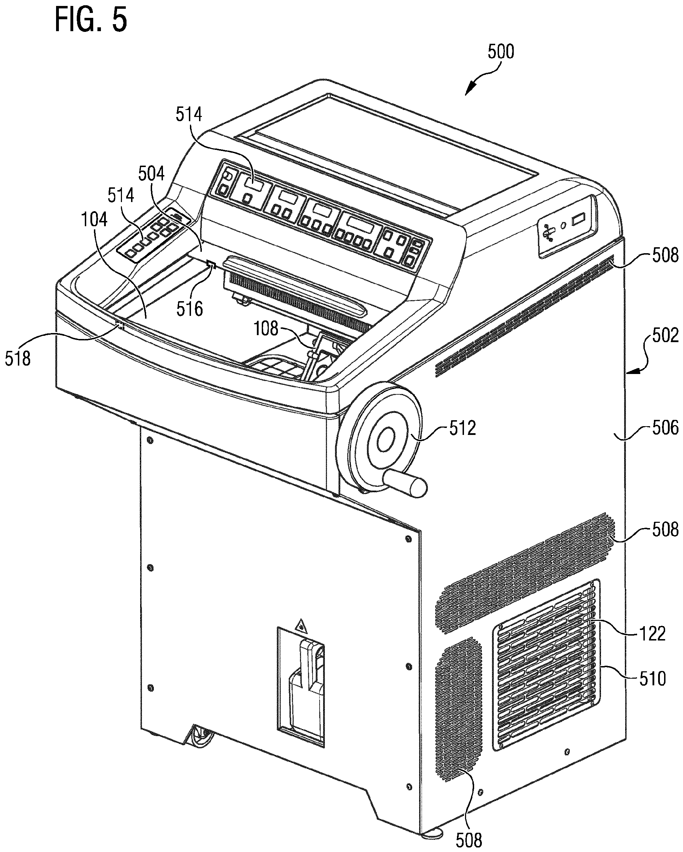

The cryostat microtome 100 comprises a cryostat chamber 104, which is thermally insulated against an outside, for example using an insulation foam such as polyurethane (PUR) foam. In Figure 1, the cryostat chamber 104 is denoted by a first dash-dotted line. The cryostat chamber 104 comprises a sample holder 106 having an object head 108 configured to hold the sample 102, and a sectioning unit 110 configured to section the sample 102. In the present embodiment, the object head 108 is configured to be moved in such a way that the sample 102 is guided past a cutting edge of a sectioning element 112, for example a blade that is received in a blade holder of the sectioning unit 110, thereby cutting thin sections of the sample 102. The movement of the object head 108 is indicated in Figure 1 by two arrows P and may be facilitated by a motor or a hand wheel 512 (c.f. Figure 5), for example. In other embodiments, the sectioning unit 110 may move the sectioning element 112 past the sample 102 while the sample 102 remains stationary. In yet another embodiment, both the sectioning element 112 and the object head 108 may be moved to create a relative motion between the cutting edge of the sectioning element 112 and the sample 102.

To cool the cryostat chamber 104, the cryostat microtome 100 also comprises a cooling system 114 having a first circuit 116 and a second circuit 118. In Figure 1, the first circuit 116 is denoted by a dashed line, the second circuit 118 is denoted by a dotted line, and the cooling system 114 is denoted by a second dash-dotted line. The first circuit 116 uses a low volume of a low GWP100 working fluid to cool the cryostat chamber 104. For example, the first circuit 116 may comprise more than 0 g and less than or equal to 100 g of a working fluid having a GWP100 of less than 1. The first circuit 116 cools the cryostat chamber 104 by compressing and condensing the working fluid outside the cryostat chamber 104, expanding the condensed working fluid, and evaporating the expanded working fluid inside the cryostat chamber 104. For compressing the working fluid, the first circuit 116 comprises a compressor 120 arranged outside the cryostat chamber 104. The expanded working fluid is then directed into the cryostat chamber 104 and evaporated by a first evaporator 128 of the first circuit 116. A piping 132 of the first circuit 116 is denoted by a solid line in Figure 1.

In the embodiment in Figure 1, the first circuit 116 exemplary also comprises a condenser 122 arranged outside the cryostat chamber 104 following the compressor 120, and a suction gas heat exchanger 136 arranged following the condenser 122. The condenser 122 is configured to cool the compressed working fluid before the working fluid enters the cryostat chamber 104. The suction gas heat exchanger 136 exchanges heat between a low-pressure gas returning to the compressor 120 from the first evaporator 128 (suction line 146) and a high-pressure liquid/liquid vapor mixture leaving the condenser 122 (liquid line 148).

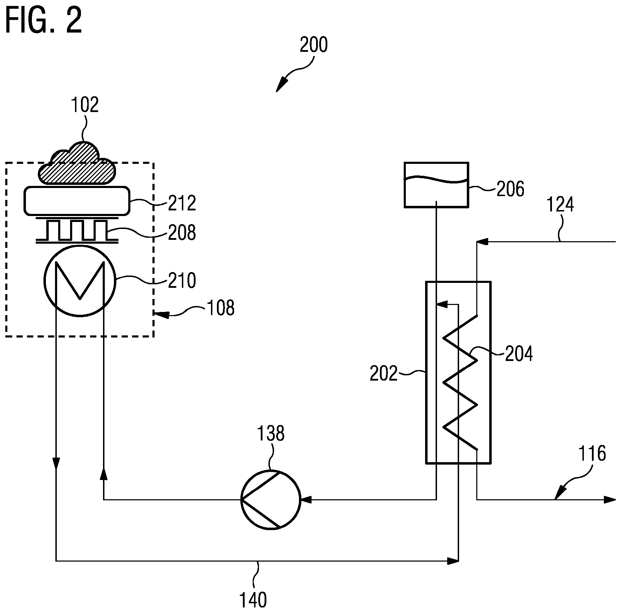

Following the suction gas heat exchanger 136, the first circuit 116 exemplary comprises a filter dryer 124 configured to remove impurities and/or to remove moisture from the working fluid. The filter dryer 124 may comprise a desiccant material to absorb moisture and may further comprise a fine mesh screen or filter to trap debris or solid contaminants. In the present embodiment, the first circuit 116 splits after the filter dryer 124. A first section of the first circuit 116 continues to the first evaporator 128, which cools the cryostat chamber 104 in general, via an expansion valve 126. A second section of the first circuit 116 is directed to exchange heat with the second circuit 118 via another expansion valve 126. In the present embodiment, the heat exchange between the first circuit 116 and the second circuit 118 is facilitated by a heat exchanger 130. In other embodiments, a heat transfer fluid tank 202 may be used to thermally couple the first circuit 116 with the second circuit 118, for example by directing a pipe segment of the first circuit 116 through the heat transfer fluid tank 202. This is described below with reference to Figure 2 Another exemplary heat transfer fluid tank 300 is described below with reference to Figure 2. In the present embodiment, the second line also comprises second evaporators 134, which cool the cryostat chamber 104 in general as well as a freezing shelf for storing samples.

Following the first evaporator 128 and the second evaporator 134, respectively, the first section and the second section are recombined into one line. An exchange phase separator may be arranged at this point in the first circuit. The exchange phase separator may be configured to separate different phases of the working fluid, for example the liquid phase from the vapor phase.

The second circuit 118 uses a heat transfer fluid, for example a brine. The heat transfer fluid is cooled by a heat exchange with the first circuit 116 and may have a temperature in the range from -50 °C to 0 °C, for example around -20 °C or -42 °C, during the operation of the cryostat microtome 100. In the embodiment shown in Figure 1, this heat exchange is facilitated by the heat exchanger 130. The cold heat transfer fluid is moved to the object head 108, where the heat transfer fluid is used to carry heat away from the sample 102. The heat transfer fluid is moved through the second circuit 118 by a pump 138, which is exemplary arranged inside the cryostat chamber 104. A piping 140 of the second circuit 118 is indicated in Figure 1 by a solid line having arrows indicating the direction of flow. In the present embodiment, the second circuit 118 exemplary also comprises two portions of flexible tubing 142 arranged before and after the object head 108 along the second circuit 118. The flexible tubing 142 allows the object head 108 to move without the risk of a heat transfer fluid leakage. In the following, another exemplary second circuit 200 will be described in more detail with reference to Figure 2.

The cryostat microtome 100 according to the present exemplary embodiment further comprises a controller 144. The controller 144 is exemplary configured to control the compressor 120, and the pump 138. The controller 144 may control the compressor 120 to turn the compressor 120 periodically on and off so that the compressor 120 is not continuously running. Thereby, the cryostat microtome 100 is not wasting energy by keeping the compressor 120 on all the time, overcooling the cryostat chamber 104 when the cryostat chamber 104 does not need the cooling capacity. A heat transfer fluid reservoir may provide cooling capacity while the compressor is turned off, saving further energy. The controller 144 may also control the pump 138 to run continuously. The controller 144 may be configured to control the aforementioned elements only when the cryostat microtome 100 is turned on, i.e. turning the compressor 120 periodically on and off is understood to be different from turning the cryostat microtome 100 on to switch to a running mode and turning the cryostat microtome 100 off to switch to a non-operating mode.

Figure 2 is a schematic view of the second circuit 200 of the cryostat microtome 100 according to an embodiment. The second circuit 200 circulates the heat transfer fluid cooled by the first circuit 116 through the object head 108 to cool the sample 102 using the pump 138.

The exemplary second circuit 200 shown in Figure 2 comprises the heat transfer fluid tank 202. The heat transfer fluid tank 202 is a reservoir for the heat transfer fluid acting as a heat sink or cooling capacity reservoir, ensuring that sufficient cold heat transfer fluid is available, for example when the compressor 120 is turned off. Since large volumes, for example in the range of 200 ml to 2000 ml, of cold heat transfer fluid can be stored in the heat transfer fluid tank 202, the tank may also act as a buffer, which can absorb heat from the cryostat chamber 104 to keep the temperature in the cryostat chamber 104 stable. To insulate the heat transfer fluid tank 202, the heat transfer fluid tank 202 may be arranged at least partially inside an insulation of the cryostat chamber 104. In the second circuit 200 shown in Figure 2, the heat transfer fluid tank 202 is also used to thermally couple the first circuit 116 to the second circuit 200. A pipe segment 204 of the first circuit 116 is arranged inside the heat transfer fluid tank 202, so that the cool working fluid circulating the first circuit 116 cools the heat transfer fluid currently inside the heat transfer fluid tank 202. The exemplary second circuit 200 shown in Figure 2 further comprises an expansion tank 206 to accommodate the thermal expansion of the heat transfer fluid. The expansion tank 206 is exemplary arranged atop the heat transfer fluid tank 202.

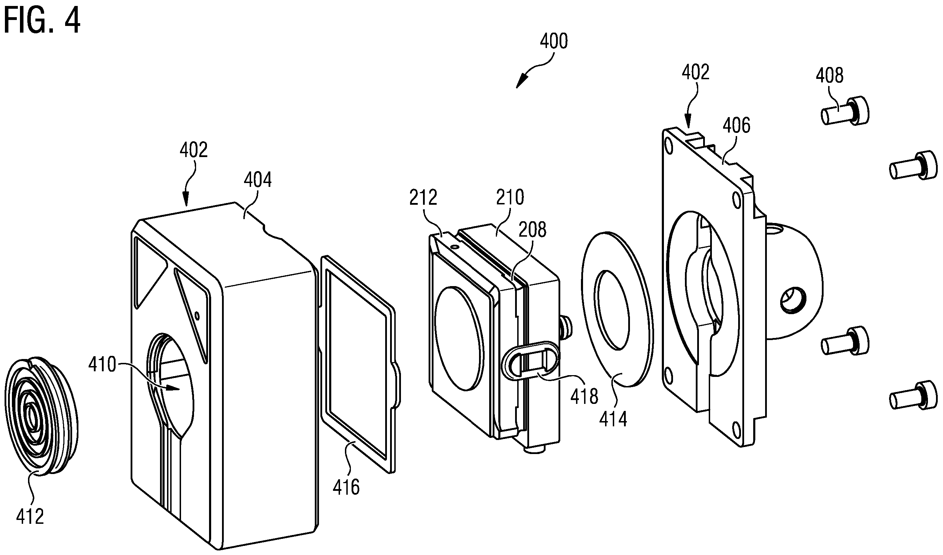

In Figure 2, the object head 108 exemplary comprises a thermoelectric cooler 208 and a heat exchanger 210. The thermoelectric cooler 208 is configured to transport heat from a cold side (or sample side) in thermal contact with the sample 102 via a contact plate 212 to a hot side in thermal contact with the heat exchanger 210, when a DC power is applied to the thermoelectric cooler 208. The heat exchanger 210 absorbs the heat from the hot side. The cold heat transfer fluid is directed through the heat exchanger 210, thereby the heat from the hot side of the thermoelectric cooler 208 is carried away. Using the thermoelectric cooler 208 the temperature of the sample 102 may be precisely controlled. Another exemplary object head 400 is described below with reference to Figure 4.

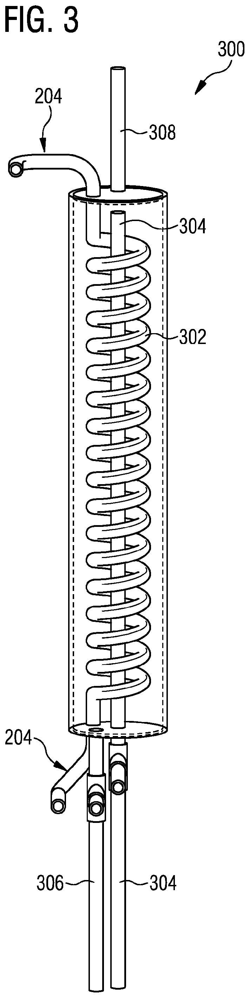

Figure 3 is a schematic view of the heat transfer fluid tank 300 of the cryostat microtome 100 according to an embodiment.

The exemplary heat transfer fluid tank 300 shown in Figure 3 is cylinder shaped and may be made from a material with high thermal conductivity, for example copper sheet. The pipe segment 204 of the first circuit 116 is directed through the heat transfer fluid tank 300 to cool the heat transfer fluid inside the heat transfer fluid tank 300. The pipe segment 204 exemplary comprises a coiled or helix-shaped subsection 302 to increase the surface area of the pipe segment 204 inside the heat transfer fluid tank 300. The heat transfer fluid tank 300 comprises a heat transfer fluid inlet 304 and a heat transfer fluid outlet 306. The heat transfer fluid outlet 306 is arranged at the bottom of the heat transfer fluid tank 300, allowing the heat transfer fluid tank 300 to be completely drained via the heat transfer fluid outlet 306. The heat transfer fluid inlet 304 comprises a pipe that enters the heat transfer fluid tank 300 from the bottom and extends almost to the top of the heat transfer fluid tank 300, ensuring that heat transfer fluid entering the heat transfer fluid tank 300 is passed over the coiled subsection 302 of the pipe segment 204. The heat transfer fluid tank 300 further comprises a filler neck 308 arranged at the top of the heat transfer fluid tank 300, which may lead to the expansion tank 206, for example.

Figure 4 is a schematic view of the object head 400 of the cryostat microtome 100 according to an embodiment. The exemplary object head 400 comprises a housing 402 in which the thermoelectric cooler 208 and the heat exchanger 210 are received in a so-called floating mount, which minimizes thermal contact, and thus the amount of heat that needs to be carried away via the heat transfer fluid and the working fluid, allowing to reduce the amount of working fluid needed.

The housing 402 exemplary comprises a front housing 404 and a back housing 406 fastened together by fastening elements 408, for example the four screws shown in Figure 4. The front housing 404 exemplary comprises an opening 410 configured to receive a removable sample plate 412. The sample plate 412 is configured to receive the sample 102 and to act as a thermal interface between the contact plate 212 arranged at the cold side of the thermoelectric cooler 208 and the sample 102. The back housing 406 exemplary comprises a ball 420 with may form part of a ball 420 and socket joint, which enables the object head 400 to be rotated around one or more axis. The flexible tubing 142 of the second circuit be routed through the ball 420, for example through the center of the ball 420. Thereby, the flexible tubing 142 is protected by the ball 420 and not stretched when the angle of the object head is adjusted.

Further, the housing 402 exemplary comprises a first elastic element 414 and an insulating frame 416. The insulating frame 416 is arranged between the front housing 404 and the thermoelectric cooler 208. The first elastic element 414 presses against the heat exchanger 210 against such that the thermoelectric cooler 208 and the contact plate 212 are pressed against the insulating frame 416, thereby realizing the floating mount. The first elastic element 414 may be a disk spring as shown in Figure 4. In the exemplary object head 400 shown in Figure 4, the contact plate 212, the thermoelectric cooler 208 and the heat exchanger 210 are further pressed together by at least one second elastic elements 418, which may be two O-rings arranged at either side as shown in Figure 4.

Figure 5 is a schematic isometric view of the cryostat microtome 500 according to an embodiment. The cryostat microtome 500 comprises a body 502 in which the cooling system 114 is arranged.

The cryostat chamber 104 is accessible via a lid 504, which is exemplary formed as a sliding lid 504 and shown in its open state in Figure 5. The lid 504 may comprise a window making it possible to see into the cryostat chamber 104 while the lid 504 is in its closed state. If a window is provided, the lid 504 may be heatable to prevent condensation on the window. To provide electrical energy, the lid 504 may be electrically connected to the body 502 of the cryostat microtome 500 via a pair of male and female connectors 516, 518, which are connected when the lid 504 is in its closed state, for example.

A side 506 of the body 502 exemplary comprises three ventilation openings 508, which enable outside 506 air to circulate the inside 506 of the body 502, allowing heat to escape the body 502 via convection. Additional ventilation openings may be arranged at further sides of the body 502, for example a back side, a front or a side opposite to the side 506. The first circuit 116 may be arranged inside 506 a dedicated chamber inside 506 the body 502, which may be vented via one or more of the ventilation openings 508. This prevents the build-up of flammable gases, which may be used as the working fluid, inside the body 502. The side 506 also comprises an opening 510 which exposes the evaporator 122 to the outside 506, which allows outside 506 air to circulate of the evaporator 122 preventing the build-up of heat inside 506 the body 502. Further, the hand wheel 512 is exemplary arranged at this side 506.

The cryostat microtome 500 further comprises control panels 514, enabling a user to set the temperature of the cryostat chamber 104 and the object head 108, 400, for example. The control panels 514 are each arranged to a side of the lid 504 the facing the user.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Cryostat microtome
- 102: Sample
- 104: Cryostat chamber
- 106: Sample holder
- 108: Object head
- 110: Sectioning unit
- 112: Sectioning element
- 114: Cooling system
- 116, 118: Circuit
- 120: Compressor
- 122: Condenser
- 124: Filter dryer
- 126: Expansion valve
- 128: Evaporator
- 130: Heat exchanger
- 132: Piping
- 134: Evaporator
- 136: Suction gas heat exchanger
- 138: Pump
- 140: Piping
- 142: Flexible tubing
- 144: Controller
- 146: Suction line
- 148: Liquid line
- 200: Circuit
- 202: Heat transfer fluid tank

- 204: Pipe segment
- 206: Expansion tank
- 208: Thermoelectric cooler
- 210: Heat exchanger
- 212: Contact plate
- 300: Heat transfer fluid tank
- 302: Subsection
- 304: Heat transfer fluid inlet
- 306: Heat transfer fluid outlet
- 308: Filler neck
- 400: Object head
- 402: Housing
- 404: Front housing
- 406: Back housing
- 408: Fastening element
- 410: Opening
- 412: Sample plate
- 414: Elastic element
- 416: Insulating frame
- 418: Elastic element
- 420: Ball
- 500: Cryostat microtome
- 502: Body
- 504: Lid
- 506: Side
- 508: Ventilation opening
- 510: Opening
- 512: Hand wheel

- 514: Control panel
- 516, 518: Connector
- P: Arrow

## Claims

1. A cryostat microtome (100, 500), comprising
a cryostat chamber (104),
a sample holder (106) arranged inside the cryostat chamber (104) and having an object head (108, 400) configured to hold a sample (102),
a sectioning unit (110) arranged inside the cryostat chamber (104) and configured to section the sample (102), and
a cooling system (114) having a first circuit (116) for cooling the cryostat chamber (104) and a second circuit (118, 200) connecting the first circuit (116) with the object head (108, 400) for cooling the object head (108, 400),
wherein the first circuit (116) comprises at least 20 g and at most 100g of a working fluid having a GWP100 of less than one, a compressor (120) arranged outside the cryostat chamber (104) and configured to compress the working fluid, and at least one evaporator (128, 134) arranged inside the cryostat chamber (104) and configured to cool the cryostat chamber (104) by evaporating the working fluid, and
wherein the second circuit (118, 200) comprises a heat transfer fluid and a pump (138) configured to move the heat transfer fluid through the second circuit (118, 200).

2. The cryostat microtome (100, 500) according to claim 1, comprising a temperature sensor arranged inside the cryostat chamber (104), and a controller (144) configured to control the compressor (120) of the first circuit (116) to turn the compressor (120) on and off based on a sensor signal of the temperature sensor.

3. The cryostat microtome (100, 500) according to claim 2, wherein the controller (144) is configured to control the pump (138) of the second circuit (118, 200) to operate continuously.

4. The cryostat microtome (100, 500) according to anyone of the preceding claims, wherein the second circuit (118, 200) comprises a heat transfer fluid tank (202, 300) thermally coupled to the first circuit (116), and, wherein at least one pipe segment (204) of the first circuit (116) is arranged inside the heat transfer fluid tank (202, 300) to thermally couple the heat transfer fluid tank (202, 300) to the first circuit (116).

5. The cryostat microtome (100, 500) according to claim 4, wherein at least one pipe segment (204) comprises a helix-shaped subsection (302).

6. The cryostat microtome (100, 500) according to claim 4 or 5, wherein the cryostat chamber (104) is insulated using an insulation foam and the heat transfer fluid tank (202, 300) is at least partly arranged inside the insulating foam.

7. The cryostat microtome (100, 500) according to anyone of the preceding claims, wherein the pump (138) of the second circuit (118, 200) is arranged inside the cryostat chamber (104).

8. The cryostat microtome (100, 500) according to anyone of the preceding claims, wherein the object head (108, 400) comprises a thermoelectric cooler (208) configured to remove heat from a sample plate (412) on which the sample (102) is arranged, and a heat exchanger (210) configured to thermally couple a hot side of the thermoelectric cooler (208) to the second circuit (118, 200).

9. The cryostat microtome (100, 500) according to claim 8, wherein the object head (108, 400) comprises a housing (402), and at least one first elastic element (414) pressing the thermoelectric cooler (208) and the heat exchanger (210) against the housing (402).

10. The cryostat microtome (100, 500) according to claim 9, wherein the object head (108, 400) comprises an insulating frame (416) arranged between the housing (402) and the thermoelectric cooler (208).

11. The cryostat microtome (100, 500) according to claim 9 or 10, wherein the housing (402) comprises a front housing (404) and a back housing (406) fastened together by fastening elements (408), and
wherein the at least one first elastic element (414) is arranged between the back housing (406) and the thermoelectric cooler (208), such that the thermoelectric cooler (208) and the heat exchanger (210) are pressed against the front housing (404).

12. The cryostat microtome (100, 500) according to any of the clams 8 to 11, wherein the thermoelectric cooler (208) and the heat exchanger (210) are pressed together by at least one second elastic element (414).

13. The cryostat microtome (100, 500) according to anyone of the preceding claims, wherein the object head is mounted to a body (502) of the cryostat microtome (500) by a ball (420) and socket joint.

14. The cryostat microtome (500) according to anyone of the preceding claims comprising a heatable lid (504) electrically connected to a body (502) of the cryostat microtome (500) by a pair of male and female electrical connectors (516, 518).

15. The cryostat microtome (100, 500) according to anyone of the preceding claims wherein the sample holder (106) comprises a drive unit configured to move the object head (108, 400) past the sectioning unit (110).
